# EUROPÄISCHE PATENTSCHRIFT

(11) **EP 1 875 319 B1**
(45) Veröffentlichungstag und Bekanntmachung des Hinweises auf die Patenterteilung: **25.03.2009**
(21) Anmeldenummer: 06743379.7
(22) Anmeldetag: 21.04.2006
(51) Int. Cl.: G05B 19/418

(54) **VERFAHREN ZUM BETRIEB EINER INDUSTRIELLEN ANLAGE**
PROCESS FOR OPERATING AN INDUSTRIAL PLANT
PROCEDE POUR FAIRE FONCTIONNER UNE INSTALLATION INDUSTRIELLE

(30) Priorität: 25.04.2005 DE 102005019427
(43) Veröffentlichungstag der Anmeldung: 09.01.2008
(73) Patentinhaber: SIEMENS AKTIENGESELLSCHAFT, 80333 München (DE)
(72) Erfinder: HILDEBRAND, Andreas, 15831 Mahlow (DE); HELM, Thomas, 12203 Berlin (DE); SEYDELL, Oliver, 12357 Berlin (DE); PIRSING, Andreas, 16766 Sommerfeld (DE)
(86) Internationale Anmeldenummer: PCT/EP2006/061764
(87) Internationale Veröffentlichungsnummer: WO 2006/114398

(56) Entgegenhaltungen:
- US-A- 4 251 858
- US-A1- 2003 158 795
- US-A1- 2004 158 474
- US-A1- 2004 254 684

## Beschreibung

Die Erfindung betrifft ein Verfahren zum Betrieb einer industriellen Anlage mittels eines Leitsystems zur Prozessführung in der industriellen Anlage gemäß Oberbegriff des Patentanspruchs 1. Die Erfindung betrifft auch eine entsprechende Vorrichtung.

Die US 4,251,858 offenbart ein Verfahren zur Überwachung industrieller Maschinen, bei dem betriebsrelevante Daten der Maschinen und diesen zugeordneten Operator-Inputmodulen an eine lokale Einheit übertragen werden, von der aus sie wiederum an weitere, hierarchisch übergeordnete Einheiten eines Überwachungssystems weitergeleitet werden. Die Maschinen werden von einem Bediener gesteuert und überwacht, so dass sie unabhängig voneinander arbeiten. Ein durch ein übergeordnetes Leitsystem gesteuertes, aufeinander abgestimmtes Arbeiten der Maschinen im Sinne einer Prozessführung über mehrere Maschinen ist dagegen nicht offenbart.

Bei einem durch die US 2003/0158795 A1 offenbarten Verfahren überwacht ein Überwachungssystem mit Hilfe von Sensoren einen Prozess auf bestimmte Ereignisse. Wenn ein derartiges Ereignis festgestellt wird, werden Prozessvariablen eines Steuersystems des Prozesses ermittelt. Zusätzlich werden von dem Überwachungssystem von einem Bediener Zusatzinformationen zu dem Ereignis abgefragt. Diese Daten werden in einer Datenbank des Überwachungssystems abgespeichert und für die Generierung von Berichten verwendet. Zusätzlich können ausgehend von den erfassten Ereignissen von dem Überwachungssystem Signale an das Steuersystem zur Steuerung des Prozesses ausgegeben werden.

Bisher werden vom Anlagenpersonal, d.h. von einem Bediener der industriellen Anlage, beobachtete Ereignisse, wie z.B. der Ausfall einer Anlagenkomponente, handschriftlich in so genannten Betriebstagebüchern niedergeschrieben. Diese Vorgehensweise ist schon allein deshalb nachteilig, da das Betriebstagebuch zur Einsichtnahme stets gegenständlich vorliegen muss und somit nur in der Anlagenwarte einsehbar ist. Durch die Eintragung in das Betriebstagebuch ist auch nicht hinreichend sichergestellt, dass betriebsrelevante Daten, beispielsweise über vorübergehende betriebliche Einschränkungen, tatsächlich in die Prozessführung einfließen.

Aufgabe der Erfindung ist es, die vorangehend beschriebenen Nachteile zu vermeiden und ein verbessertes Verfahren zum Betrieb einer industriellen Anlage sowie eine entsprechende Vorrichtung bereitzustellen.

Diese Aufgabe wird gelöst durch ein Verfahren gemäß Patentanspruch 1. Der Betrieb der industriellen Anlage wird derart wesentlich sicherer und zuverlässiger.

Mit Vorteil werden die betriebsrelevanten Daten in einer Datenbank des Betriebsüberwachungssystems gespeichert.

Vorzugsweise berücksichtigt das Leitsystem bei der Prozessführung vorübergehende Einschränkungen von Vorrichtungen aufgrund der vom Betriebsüberwachungssystem übermittelten betriebsrelevanten Daten.

Mit Vorteil können betriebsrelevante Daten unter Zuhilfenahme des Betriebsüberwachungssystems situationsbezogen angezeigt werden.

Vorzugsweise können betriebsrelevante Daten unter Zuhilfenahme des Betriebsüberwachungssystems dezentral angezeigt werden.

Mit Vorteil kann der Bediener der industriellen Anlage betriebsrelevante Daten mittels eines Terminals erfassen.

Vorzugsweise kann der Bediener betriebsrelevante Daten mittels eines mobilen Kommunikationsgerätes erfassen.

Mit Vorteil kann der Bediener betriebsrelevante Daten mittels eines mobilen Lesegerätes berührungslos erfassen.

Die der Erfindung zugrunde liegende Aufgabe wird auch gelöst durch eine Vorrichtung zur Durchführung des in seinen unterschiedlichen Ausgestaltungen vorangehend beschriebenen Verfahrens gemäß Patentanspruch 9.

Vorzugsweise weist das Betriebsüberwachungssystem mindestens eine Datenbank auf.

Einzelheiten und weitere Vorteile der Erfindung werden nachfolgend anhand von Beispielen in Verbindung mit den Zeichnungen beschrieben. Es zeigen:
- FIG 1: schematisch das erfindungsgemäße Zusammenwirken von Betriebsüberwachungssystem und Leitsystem zur Pro- zessführung,
- FIG 2: schematisch einen Teil einer Konfiguration eines Leitsystems.

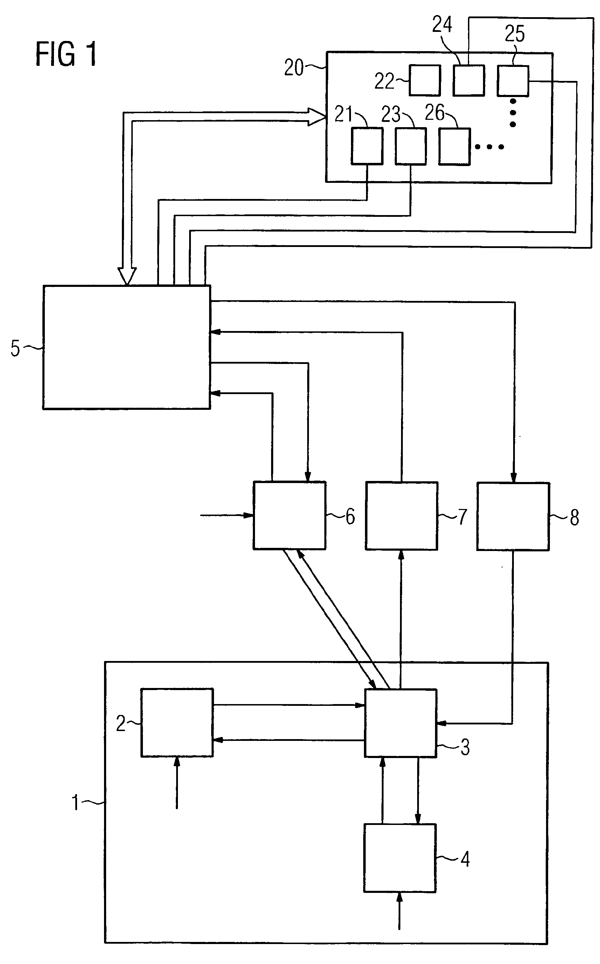

Figur 1 zeigt schematisch das erfindungsgemäße Betriebsüberwachungssystem 1, das über Schittstellenmodule 6, 7 und/oder 8 mit einem Leitsystem 5 zur Prozessführung in der industriellen Anlage 20 gekoppelt ist. Bei der industriellen Anlage 20 kann es sich beispielsweise um ein Kanalnetz, eine Kläranlage, eine Anlage zur Abfallaufbereitung und/oder - entsorgung, eine Anlage der Papierindustrie, eine Anlage der Metallindustrie oder eine Raffinerie handeln. Die vorangehende Aufzählung von Beispielen für die industrielle Anlage 20 ist nicht abschließend. Die industrielle Anlage 20 weist mehrere Vorrichtungen 21 - 26 auf. In der industriellen Anlage 20 laufen ein oder mehrere Prozesse ab, wobei eine oder mehrere Vorrichtungen 21-26 am Prozessablauf beteiligt sind.

Zur Führung des bzw. der in der industriellen Anlage 20 ablaufenden Prozesse ist das Leitsystem 5 mit der industriellen Anlage 20 gekoppelt. Zumindest ein Teil der Vorrichtungen 21 bis 26 der industriellen Anlage 20 sind mit dem Leitsystem 5 gekoppelt. Die mit dem Leitsystem 5 gekoppelten Vorrichtungen 21, 23, 24, 25 sind vorzugsweise in ein oder mehrere Automatisierungssysteme eingebunden, mittels derer die Anbindung der Vorrichtung 21, 23, 24, 25 an das Leitsystem 5 hergestellt wird.

Das Betriebsüberwachungssystem 1 weist vorzugsweise ein Überwachungsmodul 2, eine Datenbank 3 und gegebenenfalls zusätzlich ein Konfigurationsmodul 4 auf. Betriebsrelevante Daten, die die industrielle Anlage 20 betreffen, können im Betriebsüberwachungssystem erfasst werden, indem sie beispielsweise von einem Bediener der industriellen Anlage 20 in das Überwachungsmodul 2 manuell eingegeben werden. Innerhalb des Betriebsüberwachungssystems 1 werden betriebsrelevante Daten vorzugsweise in der Datenbank 3, die z.B. in Form eines SQL-Servers implementiert sein kann, abgelegt. Das Konfigurationsmodul 4 erlaubt ein manuelles Parametrieren des Betriebsüberwachungssystems 1. Über das Konfigurationsmodul 4 können Parameter in der Datenbank 3 gesetzt oder aus dieser ausgelesen werden.

Das Betriebsüberwachungssystem 1 ist über ein oder mehrere Schnittstellenmodule 6, 7 bzw. 8 mit dem Leitsystem 5 gekoppelt.

Prozessrelevante Daten werden in elektronischer Form und vorzugsweise in normiertem Format in der Datenbank 3 gespeichert, nachdem sie zuvor mit Hilfe des Überwachungsmoduls 2 erfasst wurden. Betriebsrelevante Daten, die Ereignisse betreffen, die die Prozessführung bzw. den Prozessablauf in der industriellen Anlage 20 beeinflussen können, sind beispielsweise Daten über Betriebsstörungen bzw. vorübergehende Einschränkungen von Vorrichtungen 21-26 der industriellen Anlage 20. So kann beispielsweise ein Bediener einer Kanalnetzsteuerung feststellen, dass ein Schieber in einem Kanalnetz, der u.U. nicht in ein Automatisierungssystem eingebunden ist, nicht vollständig geschlossen oder geöffnet werden kann. Der Bediener könnte auch feststellen, dass ein Schieber sich in einer nicht vorgesehenen Position befindet und/oder dass sich ein Schieber vorübergehend nicht aus seiner Position bewegen lässt. Ein Bediener einer Anlage der Metallindustrie, z.B. ein Bediener eines Walzwerks, könnte feststellen, dass der Antrieb eines Walzgerüstes vorübergehend nur mit begrenzter Drehzahl gefahren werden kann.

Betriebsrelevante Daten, die Ereignisse betreffen, die die Prozessführung bzw. den Prozessablauf in der industriellen Anlage 20 beeinflussen können, werden in elektronischer Form vorzugsweise über das Schnittstellenmodul 6 an das Leitsystem 5 übertragen. Mit Hilfe des Schnittstellenmoduls 6 können derartige Daten in einem durch das Leitsystem verarbeitbaren Datenformat zum Leitsystem 5 übertragen werden, gegebenenfalls aber auch umgekehrt aus dem Leitssytem 5 ausgelesen werden und in der Datenbank 3 des Betriebsüberwachungssystems 1 gespeichert werden. Mittels des Schnittstellenmoduls 7 können Auslösesignale für bestimmte Vorgänge an das Leitsystem 5 übertragen werden. Mit Hilfe des Schnittstellenmoduls 8 können Einträge aus dem Meldesystem des Leitsystems 5 ausgelesen und in der Datenbank 3 gespeichert werden. Es kann zweckmäßig sein, dass manuelle Eingaben, die einen Zugriff auf das Leitsystem 5 und/oder das Betriebsüberwachungssystem 1 bedingen, von einem Bediener der industriellen Anlage 20 über ein Schnittstellenmodul 6 vorgenommen werden.

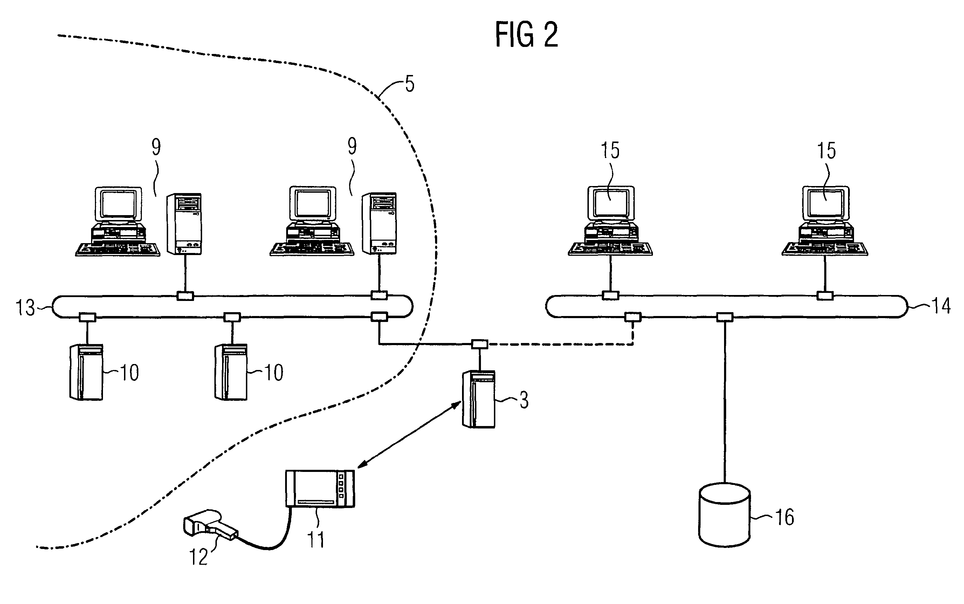

Figur 2 zeigt mehrere Terminals 9, die über einen Terminal-Bus 13 untereinander und mit Servern 10 des Leitsystems 5 verbunden sind. Die Terminals 9 des Leitsystems 5 dienen als Schnittstelle zwischen den Bedienern der industriellen Anlage 20 und dem Leitsystem 5. Über die Terminals 9 ist vorzugsweise auch die manuelle Eingabe betriebsrelevanter Daten in das Überwachungsmodul 2 (siehe Figur 1) möglich. Die Datenbank 3 des Betriebsüberwachungssystems 1 (siehe Figur 1) ist vorzugsweise mit dem Terminal-Bus 13 des Leitsystems 5 gekoppelt. Die Erfassung betriebsrelevanter Daten kann beispielsweise auch über ein mobiles Kommunikationsgerät 11 erfolgen. Vorzugsweise können betriebsrelevante Daten auch berührungslos mittels eines Lesegerätes 12 erfasst werden. Das mobile Kommunikationsgerät 11 kann mit einem Lesegerät 12 zur berührungslosen Datenerfassung verbunden sein. Der Datenaustausch zwischen dem mobilen Kommunikationsgerät 11 und der Datenbank 3 kann beispielsweise unter Zuhilfenahme einer Infrarotverbindung, einer Bluetooth-Verbindung, eines oder mehrerer Speichermedien und/oder unter Zuhilfenahme eines oder mehrerer drahtloser Netzwerke (z.B. WLAN) erfolgen.

Das Erfassen von betriebsrelevanten Daten, d.h. die Eingabe von Daten in das Betriebsüberwachungssystem 1 erfolgt erfindungsgemäß in einem definierten Format.

Die Datenbank 3 kann auch mit einem Bussystem 14 verbunden sein, das nicht Bestandteil des Leitsystems 5 ist. An das Bussystem 14 sind ein oder mehrere Terminals 15 angeschlossen, über die für das Betriebsüberwachungssystem 1 (siehe Figur 1) bestimmte Eingaben betriebsrelevanter Daten erfasst werden können. Mit dem Bussystem 14 können auch eine oder mehrere externe Datenbanken 16, z.B. eine SAE-Datenbank, verbunden sein.

Betriebsrelevante Daten über die Prozessführung beeinflussende Ereignisse sind, wie bereits ausgeführt, beispielsweise betriebliche Einschränkungen einer Vorrichtung 21 - 26 der industriellen Anlage 20. Ist beispielsweise eine nicht unmittelbar an das Leitsystem 5 angebundene Vorrichtung 22, 26 gestört bzw. in einem dem Leitsystem 5 nicht bekannten Zustand, kann dies Auswirkungen auf andere Vorrichtungen 21-26 der industriellen Anlage haben. Vorübergehende betriebliche Einschränkungen, die in der industriellen Anlage 20 vorliegen und von einem Bediener festgestellt werden, lassen sich außerdem mittels des Betriebsüberwachungssystems 1 nachvollziehbar dokumentieren.

Das Betriebsüberwachungssystem 1 ist vorzugsweise als ein auf einem Terminal 9 bzw. 15 ablauffähiges Computerprogramm ausgebildet. Vorzugsweise kann das Betriebsüberwachungssystem 1 über Ein- und Ausgabevorrichtungen, z.B. Terminals 9 des Leitsystems 5, bedient werden. In der Datenbank 3 kann eine Archivierung betriebsrelevanter Daten im Sinne einschlägiger gesetzlicher Richtlinien erfolgen. Das Betriebsüberwachungssystem 1 kann auch zur elektronischen Erfassung von Schichtbucheinträgen dienen.

Betriebsrelevante Daten, wie beispielsweise wichtige Restriktionen, können dezentral, beispielsweise auf einem oder mehreren der Terminals 9 bzw. 15, angezeigt werden. Das Anzeigen betriebsrelevanter Daten kann insbesondere auch situationsbezogen erfolgen, d.h. z.B. in Form eines Alarms oder bei Abfrage von mit den betriebsrelevanten Daten in Zusammenhang stehenden Informationen durch einen Bediener der industriellen Anlage 20.

Mit Hilfe des Betriebsüberwachungssystem 1 können betriebliche Vorgänge auf eine oder mehrere Vorrichtungen 21-26 der industriellen Anlage 20 bezogen dokumentiert werden. Mittels des Überwachungsmoduls 2 können betriebsrelevante Daten auch gefiltert und gesucht werden. Das Betriebsüberwachungssystem 1 kann auch zum Instandhaltungs- und Servicemanagement verwendet werden.

Der wesentliche der Erfindung zugrundeliegende Gedanke lässt sich wie folgt zusammenfassen:

Die Erfindung betrifft ein Verfahren zum Betrieb einer industriellen Anlage 20 mittels eines Leitsystems 5 zur Prozessführung in der industriellen Anlage 20, wobei betriebsrelevante Daten wie beispielsweise Zustände, Störungen und/oder Einschränkungen von Vorrichtungen 21-26 der industriellen Anlage 20 von einem Bediener erfasst werden, wobei die betriebsrelevanten Daten in einem Betriebsüberwachungssystem 1 erfasst und in elektronischer, vorzugsweise normierter Form, d.h. in einem definierten Format, gespeichert werden, wobei betriebsrelevante Daten über Ereignisse, die die Prozessführung beeinflussen können, wie beispielsweise Einschränkungen von Vorrichtungen 21-26 elektronisch an das Leitsystem 5 übermittelt werden. Betriebsrelevante Daten und Ereignisse können so zuverlässig archiviert, dokumentiert und den Bedienern der industriellen Anlage 20 verfügbar gemacht werden, wobei eine Berücksichtigung von prozessrelevanten Daten im Leitsystem 5 auch dann sichergestellt wird, wenn diese Daten Vorrichtungen 22 bzw. 26 betreffen, die nicht an das Leitsystem 5 angebunden sind.

## Patentansprüche

1. Verfahren zum Betrieb einer industriellen Anlage (20) mittels eines Leitsystems (5) zur Prozessführung in der industriellen Anlage (20), wobei betriebsrelevante Daten von einem Bediener der industriellen Anlage (20) erfasst werden, **dadurch gekennzeichnet, dass** die betriebsrelevanten Daten in einem Betriebsüberwachungssystem (1) erfasst und in elektronischer Form gespeichert werden, wobei betriebsrelevante Daten über die Prozessführung beeinflussende Ereignisse elektronisch an das Leitsystem (5) übermittelt werden.

2. Verfahren nach Anspruch 1, wobei die betriebsrelevanten Daten in einer Datenbank (3) des Betriebsüberwachungssystems (1) gespeichert werden.

3. Verfahren nach einem der vorangehenden Ansprüche, wobei betriebsrelevante Daten zu Vorrichtungen (22, 26) der industriellen Anlage (20) erfasst und gespeichert werden, die nicht an das Leitsystem (5) angebunden sind.

4. Verfahren nach einem der vorangehenden Ansprüche, wobei das Leitsystem (5) vorübergehende Einschränkungen von Vorrichtungen (21, 22, 23, 24, 25, 26) aufgrund der vom Betriebsüberwachungssystem (1) übermittelten betriebsrelevanten Daten bei der Prozessführung berücksichtigt.

5. Verfahren nach einem der vorangehenden Ansprüche, wobei betriebsrelevante Daten unter Zuhilfenahme des Betriebsüberwachungssystems (1) situationsbezogen angezeigt werden.

6. Verfahren nach einem der vorangehenden Ansprüche, wobei betriebsrelevante Daten unter Zuhilfenahme des Betriebsüberwachungssystems (1) dezentral angezeigt werden.

7. Verfahren nach einem der vorangehenden Ansprüche, wobei der Bediener betriebsrelevante Daten mittels eines Terminals (9, 15) erfasst.

8. Verfahren nach einem der vorangehenden Ansprüche, wobei der Bediener betriebsrelevante Daten mittels eines mobilen Kommunikationsgerätes (11) erfasst.

9. Verfahren nach einem der vorangehenden Ansprüche, wobei der Bediener betriebsrelevante Daten mittels eines mobilen Lesegerätes (12) berührungslos erfasst.

10. Vorrichtung zur Durchführung eines Verfahrens nach einem der vorangehenden Ansprüche, mit einem Leitsystem (5), mit mindestens einem Schnittstellenmodul (6, 7, 8) und mit einem Betriebsüberwachungssystem (1), wobei das Betriebsüberwachungssystem (1) über das mindestens eine Schnittstellenmodul (6, 7, 8) mit dem Leitsystem (5) gekoppelt ist.

11. Vorrichtung nach Anspruch 11 zur Durchführung eines Verfahrens nach einem der Ansprüche 2 bis 9, wobei das Betriebsüberwachungssystem (1) ein Überwachungsmodul (2) und mindestens eine Datenbank (3) aufweist.

## Claims

1. Method for operating an industrial plant (20) by means of a control system (5) that controls processes in the industrial plant (20), whereby operationally-relevant data is acquired by an operator of the industrial plant (20), **characterized in that** the operationally-relevant data is acquired in an operation monitoring system (1) and is stored in electronic form, whereby operationally-relevant data concerning events affecting process control is transmitted electronically to the control system (5).

2. Method according to claim 1, whereby the operationally-relevant data is stored in a database (3) of the operation monitoring system (1).

3. Method according to one of the preceding claims, whereby operationally-relevant data relating to devices (22, 26) of the industrial plant (20) that are not attached to the control system (5) is acquired and stored.

4. Method according to one of the preceding claims, whereby during process control the control system (5) takes into consideration temporary degradation affecting devices (21, 22, 23, 24, 25, 26) as a result of the operationally-relevant data provided by the operation monitoring system (1).

5. Method according to one of the preceding claims, whereby operationally-relevant data is displayed with the aid of the operation monitoring system (1) in a situation-related manner.

6. Method according to one of the preceding claims, whereby operationally-relevant data is displayed decentrally with the aid of the operation monitoring system (1).

7. Method according to one of the preceding claims, whereby the operator acquires operationally-relevant data by means of a terminal (9, 15).

8. Method according to one of the preceding claims, whereby the operator acquires operationally-relevant data by means of a mobile communication unit (11).

9. Method according to one of the preceding claims, whereby the operator acquires operationally-relevant data in a noncontact manner by means of a mobile reader unit (12).

10. Device for carrying out a method according to one of the preceding claims, with a control system (5), with at least one interface module (6, 7, 8) and with an operation monitoring system (1), whereby the operation monitoring system (1) is coupled by way of the at least one interface module (6, 7, 8) to the control system (5).

11. Device according to claim 10 for carrying out a method as claimed in one of claims 2 to 9, whereby the operation monitoring system (1) has a monitoring module (2) and at least one database (3).

## Revendications

1. Procédé pour faire fonctionner une installation (20) industrielle au moyen d'un système (5) de conduite pour mener un processus dans l'installation (20) industrielle, des données pertinentes pour le fonctionnement étant relevées par un opérateur de l'installation (20) industrielle, **caractérisé en ce que** l'on relève les données pertinentes pour le fonctionnement dans un système (1) du contrôle du fonctionnement et on les mémorise sous forme électronique, des données pertinentes pour le fonctionnement concernant des évènements influençant la conduite du processus étant transmises électroniquement au système (5) de conduite.

2. Procédé suivant la revendication 1, dans lequel on mémorise les données pertinentes pour le fonctionnement dans une base (3) de données du système (1) de contrôle du fonctionnement.

3. Procédé suivant l'une des revendications précédentes, dans lequel on relève et on mémorise des données pertinentes pour le fonctionnement sur des dispositifs (22, 26) de l'installation (20) industrielle qui ne sont pas reliés au système (5) de conduite.

4. Procédé suivant l'une des revendications précédentes, dans lequel le système (5) de conduite tient compte pour mener le processus de limitations transitoires de dispositif (21, 22, 23, 24, 25, 26) sur la base des données pertinentes pour le fonctionnement et transmises par le système (1) de contrôle du fonctionnement.

5. Procédé suivant l'une des revendications précédentes, dans lequel on affiche, en rapport avec la situation, des données pertinentes pour le fonctionnement en s'aidant du système (1) du contrôle du fonctionnement.

6. Procédé suivant l'une des revendications précédentes, dans lequel on affiche de manière décentralisée des données pertinentes pour le fonctionnement en s'aidant du système (1) du contrôle du fonctionnement.

7. Procédé suivant l'une des revendications précédentes, dans lequel l'opérateur relève des données pertinentes pour le fonctionnement au moyens d'un terminal (9, 15).

8. Procédé suivant l'une des revendications précédentes, dans lequel l'opérateur relève des données pertinentes pour le fonctionnement au moyen d'un appareil (11) mobile de communication.

9. Procédé suivant l'une des revendications précédentes, dans lequel l'opérateur relève sans contact des données pertinentes pour le fonctionnement au moyen d'un appareil (12) mobile de lecture.

10. Dispositif pour la mise en oeuvre d'un procédé suivant l'une des revendications précédentes, comprenant un système (5) de conduite, au moins un module (6, 7, 8) d'interface et un système (1) de contrôle du fonctionnement, le système (1) du contrôle du fonctionnement étant couplé au système (1) de conduite par le au moins un module (6, 7,8) d'interface.

11. Dispositif suivant la revendication 10 pour la mise en oeuvre d'un procédé suivant l'une des revendications 2 à 9, dans lequel le système (1) de contrôle du fonctionnement a un module (2) de contrôle et au moins une base (3) de données.
